# EUROPEAN PATENT SPECIFICATION

(11) **EP 0 841 830 B1**
(45) Date of publication and mention of the grant of the patent: **12.05.2004**
(21) Application number: 97203418.5
(22) Date of filing: 04.11.1997
(51) Int. Cl.: H04Q 11/04

(54) **Method for the transmission of DECT frames**
Verfahren für die Übertragung von DECT-Rahmen
Méthode pour la transmission de trames DECT

(30) Priority: 06.11.1996 NL 1004458
(43) Date of publication of application: 13.05.1998
(73) Proprietor: Koninklijke KPN N.V., 9726 AE Groningen (NL)
(72) Inventor: Asgari, Hamidreza, 2578 WL The Hague (NL)

(56) References cited:
- EP-A- 0 595 392
- M. MASCOLI, A.CICCHETTI, M. LISTANTI: "Alternative Scenarios for Data Applications Via Internet-Mobile and DECT-ATM Interworking" FOURTH IEEE INTERNATIONAL CONFERENCE ON UNIVERSAL PERSONAL COMMUNICATIONS ICUPC '95, 6 - 10 November 1995, TOKYO, pages 788-792, XP000675773

## Description

### BACKGROUND OF THE INVENTION

The invention relates to a method for the transmission of DECT frames through ATM data cells. The invention further relates to a system for carrying out such a method.

From reference 1 it is known to transmit DECT frames through ATM cells through a so-called InterWorking Unit (IWU), using an AAL5 protocol. Herein the DECT frames are transformed into ATM cells by intervention of an "ATM Adaptation Layer#5" (AAL5) protocol.

### SUMMARY OF THE INVENTION

The invention is based upon the insight that the physical structure of DECT frames matches that of ATM cells to such a large extent that they can be "mapped" very well onto each other in the physical domain (OSI physical layer). An ATM cell comprises 53 octets, 5 for the header and 48 for data. A DECT frame comprises 24 time slots, each having a header of 8 and a data part of 40 octets, in all 48 octets. Those 48 octets of such a DECT time slot fit exactly in the data part of an ATM cell. Consequently, a DECT frame of 24 time slots can be transmitted by 24 ATM cells.

According to the method according to the invention, each time slot (subframe) of a DECT frame, i.e. both the DECT header and the DECT data part, is directly written into the data part of an ATM cell and transmitted thereby.

### EXEMPLARY EMBODIMENTS

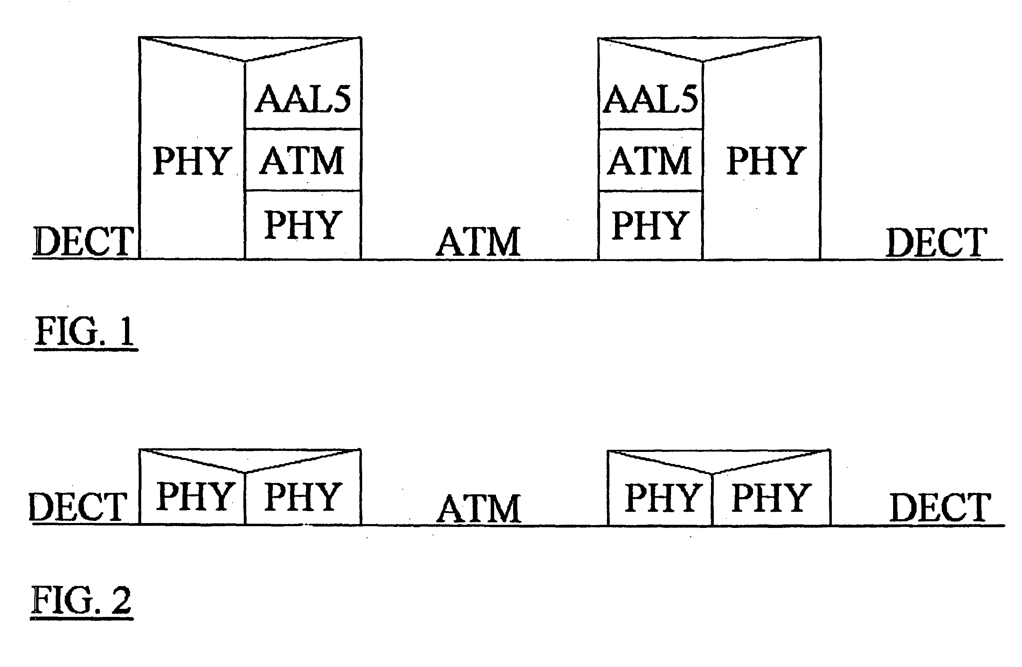

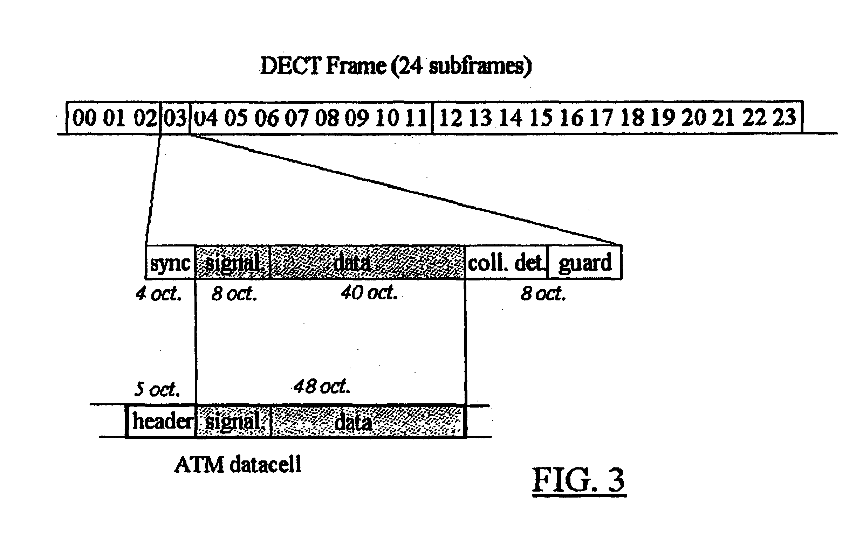

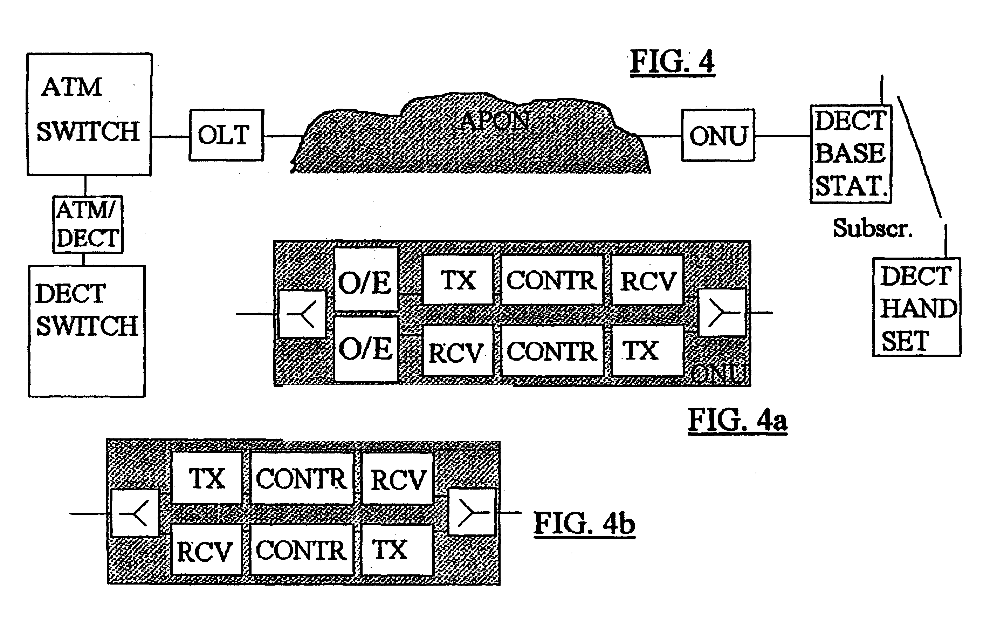

Figure 1 shows the conversion of DECT frames into ATM cells according to the prior art. Figure 2 schematically shows the conversion according to the invention. Figure 3 shows a DECT frame, made up of ATM cells. Figure 4 shows an example of the means with which the method according to the invention can be implemented.

Figure 1 schematically shows the conversion of DECT frames into ATM cells and conversely, according to the prior art see reference 1. The physical DECT frames are converted into physical ATM cells which are transported by an ATM network, using an AAL5 protocol and an ATM layer. The ATM cells are reconverted into DECT frames through an ATM and an AAL5 layer on the other side of the ATM network.

As expounded in the above, the physical structure of DECT frames (unintentionally) matches that of ATM cells so well that it is absolutely not necessary to convert DECT frames into ATM cells (and conversely) through a conversion protocol. Figure 2 schematically shows that DECT frames are converted directly, in the physical domain, into ATM cells and vice versa. The way in which and the means with which this happens, will be dealt with in the explanation of Figure 4.

Firstly, Figure 3 shows the make-up of DECT frame and the make-up of an ATM cell. For cordless communication, a DECT frame comprises 24 subframes, each of 60 octets. A synchronisation word of 4 octets serves to be able to detect the subsequent DECT subframe (time slot). The core of the DECT subframe consists of a header of 8 octets, which contains signalling data, and a data part of 40 octets. Finally, 8 octets have been reserved for collision detection etc. The synchronisation word and the collision detection and guard time parts of the DECT time slot are only required for the radio communication. Apart from this, they do not serve any purpose and consequently need not to be transformed into the ATM domain.

The core of an ATM cell is formed by an ATM header of 5 octets and a data part of 48 octets. Normally ATM cells are preceded by a preamble, with which mutual cell collision is prevented and with which the start of the ATM cells can be detected (see inter alia reference 2).

Figure 4 schematically shows an "ATM Passive Optical Network" (APON) and a local subscriber which makes use of a cordless telephone system which uses the DECT protocol for the communication between the local base station and the local handset(s). The local base station has direct (in a "Fibre-To-The-Home" system) or indirect (in a "Fibre-To-The-Curb" system) access to the APON through an "Optical Network Unit" ONU, in which E/O conversion takes place. On the exchange side; the APON is connected to the exchange, which operates in the electrical domain, and in which E/O conversion takes place, just as in the ONU. ATM signals are routed to and from subscribers in the exchange by means of ATM switches, one of which has been drawn. The ATM cells received from DECT subscribers are routed through the ATM switches to a DECT server or DECT controller, where the DECT frames are "unpacked" from the ATM cells and processed further. In fact a DECT network is formed that makes "end-to-end" use of the DECT protocol, but which makes use of an ATM based network, in this case the APON, for the transport of DECT frames.

According to the invention, DECT (sub)frames, originating from the base station (in cooperation with a DECT handset) are fitted into the ONU in the data part of ATM cells which are generated there. DECT subframes are withdrawn from the ATM cells originating from the DECT server, in the other direction in the ONU, and presented to the base station.

The ONU, see Figure 4a, has been supplied with a receiving device RCV, in which the DECT frames are received, a control device CONTR and a transmission device TX in both directions. Furthermore, O/E conversion devices for converting electrical signals into optical signals and conversely are situated on the side of the APON. The control devices can be very simple. If complete DECT subframes are utilised, which normally are used for radio-telegraphic (cordless) applications, including the important header ("sync") and footer ("collision detection" and "guard time")which are important for said radio-telegraphic applications, then the first four octets of each arriving DECT subframe are counted by the control device in each time slot and the subsequently appearing 48 octets are passed on to the transmission device. Moreover an ATM header is generated by the control device which is presented to the transmission device, prior to the 48 octets. The header contains ATM routing information to the ATM address of the DECT server. The transmission device presents the ATM cells to the O/E converter, which presents the ATM cells to the APON in the optical domain. The APON transfers the cells to the OLT, in which the optical ATM cells are converted in electrical ones, which subsequently are routed to the DECT server in the ATM switch. The DECT server is preceded by an ATM/DECT conversion device which is shown in more detail in Figure 4b. The conversion device serves to convert ATM cells in DECT frames and conversely. It is similar to that of Figure 4a, with the exception of the O/E converters, which are, as known, situated in the OLT.

DECT frames destined for a DECT base station are presented downstream to the APON, after having been entered into the data part of ATM cells (24 ATM cells per DECT frame) by the ATM/DECT conversion device, through the ATM switch and the OLT, where E/O conversion takes place. On the subscriber side, ATM cells are converted into the electrical domain by the O/E converter in the ONU and fed to ATM receiver RCV. Said receiver can be of a type as described in reference 3. A (second) control device CONTR in the ONU only passes through the data part of the downstream cells. The DECT frames unpacked from the ATM cells in this way are then transmitted by the transmitter TX to the DECT base station en from there to the DECT handset.

### REFERENCES

1. Alternative scenarios for data applications via Internet-mobile and DECT-ATM interworking, Proceedings of ICUPC '95, Nov. 1995; IEEE, pp. 788-92.
2. EP-632614 (95.01.04); ASGARI, H. (KPN)
3. EP-629061 (94.12.14); DE BLOK, C.M. (KPN)

## Claims

1. Method for the transmission of DECT frames, comprising DECT subframes each having a DECT signalling part and a DECT data part, through ATM data cells, each comprising an ATM header and an ATM data part, **CHARACTERISED IN THAT** the DECT signalling part and the DECT data part of each DECT subframe is transported through the ATM data part of an ATM cell.

2. Transmission system for the transmission, from a first location to a second location, of DECT frames, comprising DECT subframes each having a DECT signalling part and a DECT data part, through ATM data cells, each comprising an ATM header and an ATM data part, **CHARACTERISED BY** first conversion means, at the first location, which write both the signalling part and the data part of each DECT subframe into the data part of an ATM cell, as well as by second conversion means, at the second location, which read the DECT subframes written in the ATM cells out of said ATM cells.

## Patentansprüche

1. Verfahren zur Übertragung von DECT-Rahmen, mit DECT-Unterrahmen, die jeweils einen DECT-Signalisierteil und einen DECT-Datenteil aufweisen, über ATM-Datenzellen, die jeweils einen ATM-Header und ein ATM-Datenteil aufweisen, **dadurch gekennzeichnet, dass** der DECT-Signalisierteil und der DECT-Datenteil von jedem DECT-Unterrahmen durch den ATM-Datenteil einer ATM-Zelle transportiert wird.

2. Übertragungssystem zur Übertragung von DECT-Rahmen von einem ersten Ort zu einem zweiten Ort, die DECT-Unterrahmen aufweisen, die jeweils einen DECT-Signalisierteil und einen DECT-Datenteil aufweisen, über ATM-Datenzellen, die jeweils ein ATM-Header und ein ATM-Datenteil aufweisen, **gekennzeichnet durch** erste Wandlermittel am ersten Ort, die sowohl den Signalisierteil als auch den Datenteil von jedem DECT-Unterrahmen in den Datenteil von einer ATM-Zelle schreiben, und weiter **durch** zweite Wandlungsmittel am zweiten Ort, die die DECT-Unterrahmen, die in den ATM-Zellen geschrieben worden sind, aus den besagten ATM-Zellen herauslesen.

## Revendications

1. Procédé de transmission de trames DECT, comprenant des sous-trames DECT ayant chacune une partie de signalisation DECT et une partie données DECT, par l'intermédiaire de cellules de données ATM, comprenant chacune un en-tête ATM et une partie données ATM, **caractérisé en ce que** la partie de signalisation DECT et la partie données DECT de chaque sous-trame DECT est transportée par l'intermédiaire de la partie données ATM d'une cellule ATM.

2. Système de transmission destiné à transmettre, d'un premier lieu à un deuxième lieu, des trames DECT, comprenant des sous-trames DECT ayant chacune une partie de signalisation DECT et une partie données DECT, par l'intermédiaire de cellules de données ATM, comprenant chacune un en-tête ATM et une partie données ATM, **caractérisé par** un premier moyen de conversion, situé dans le premier lieu, qui écrit à la fois la partie de signalisation et la partie données de chaque sous-trame DECT dans la partie données d'une cellule ATM, ainsi que par un deuxième moyen de conversion, situé dans le deuxième lieu, qui lit les sous-trames DECT écrites dans les cellules ATM pour les placer à l'extérieur desdites cellules ATM.
